# EUROPÄISCHE PATENTSCHRIFT

(11) **EP 0 797 700 B1**
(45) Veröffentlichungstag und Bekanntmachung des Hinweises auf die Patenterteilung: **29.07.1998**
(21) Anmeldenummer: 95942090.2
(22) Anmeldetag: 09.12.1995
(51) Int. Cl.: D06N 7/00, B60N 3/04, B32B 7/06, B32B 5/24, B32B 31/00

(54) **WIEDERVERWERTBARE TEXTILE OBERBÖDEN**
REUSABLE TEXTILE FLOOR COVERINGS
REVETEMENTS DE SOL TEXTILES REUTILISABLES

(30) Priorität: 13.12.1994 DE 4444290; 04.03.1995 DE 19507591
(43) Veröffentlichungstag der Anmeldung: 01.10.1997
(73) Patentinhaber: HP-CHEMIE PELZER RESEARCH & DEVELOPMENT Ltd., Waterford, County Waterford (IE)
(72) Erfinder: PELZER, Helmut, D-58454 Witten (DE)
(74) Vertreter: Jönsson, Hans-Peter, Dr.Dipl.-Chem.
(86) Internationale Anmeldenummer: EP9504856
(87) Internationale Veröffentlichungsnummer: WO9618766

(56) Entgegenhaltungen:
- EP-A- 0 268 875
- WO-A-94/01278
- DE-U- 9 208 297
- GB-A- 1 376 262
- GB-A- 2 228 675

## Beschreibung

Gegenstand der Erfindung sind wiederverwertbare textile Oberböden in Kraftfahrzeugen mit einem mehrschichtigen Aufbau sowie Verfahren zu ihrer Herstellung.

Textile Oberböden in Kraftfahrzeugen an sich sind bekannt. Diese werden üblicherweise dadurch hergestellt, daß man zunächst einen textilen Bodenbelag in einer Matrizenform des Bodenbleches des Kraftfahrzeuges formt. Bedingt durch den Getriebetunnel oder auf den Bodenblechen befindlichen Erhöhungen oder Vertiefungen treten hierbei Höhendifferenzen von wenigen Millimetern bis mehreren Zentimetern auf.

Üblicherweise werden rückenbeschichtete, Velours- oder Nadelfilzbodenbeläge eingesetzt. Zur verbesserten Schallisolierung werden bei hochwertigen Fahrzeugen die Bodenbeläge mit einer sogenannten Schwerschicht versehen. Hierbei handelt es sich beispielsweise um eine bis zu 70 Gew.-% Füllstoff enthaltende EPDM-Folie.

Das so erhaltene Laminat aus rückenbeschichtetem Teppichboden und Schwerschicht wird üblicherweise der Verformung unterzogen.

Zum Ausgleich der Bodenunebenheiten des Bodenbleches und zur Schallabsorption wird im Stand der Technik mit Hilfe des Hinterspritzverfahrens ein Absorptions-Schaumrücken auf das obengenannte Laminat aufgebracht. Insbesondere ist im Stand der Technik die Verwendung eines gefüllten Zweikomponenten-Polyurethanschaums (Schwerschaum) bevorzugt, der in das Werkzeug eingespritzt wird. Dieser Polyurethanschaum ist im Verbund mit der Schwerschicht akustisch wirksam.

Die WO 93/11927 betrifft großflächige Verkleidungsteile aus thermoplastischen Kunststoffen für den Kraftfahrzeug-(Kfz)-Innenbereich oder gleichwertige Anwendungen, wobei der Träger aus Polyolefin-Partikelschäumen besteht, und auf denen eine Dekorschicht aus vornehmlich polyolefinisch aufgebauten Polymeren während des Formteil-Bildungsvorgangs aufkaschiert wird, die aus einem mehrlagigem Gewirke oder Gewebe mit eingewirkten Abstandshaltern aus vorzugsweise polyolefinischen Polymerfäden besteht, eine dekorative textile Oberfläche besitzt oder auf der Oberseite mit einer dekorativ gestalteten Folie - vornehmlich auf Basis olefinischer Polymere - laminiert ist, beziehungsweise zusätzlich auf der Rückseite mit einer Polyolefinfolie laminiert ist. Als Verkleidungsteile für den Kraftfahrzeug-Innenraum im Sinne dieser Druckschrift werden insbesondere Türseitenteile, Himmelverkleidungen (Fertighimmel), Sitzrückverkleidungen, Hutablagen und Seitenverkleidungen aus thermoplastischen Kunststoffen verstanden.

Die WO 93/00216 betrifft ein Verfahren zur Herstellung von mehrschichtigen Formkörpern durch Hinterspritzen eines aus einem im wesentlichen flexiblen, aus einem folienartigen Oberflächenmaterial (19) wie Leder oder textilen Stoffen und einer auf dessen Rückseite kaschierten Schaumstoffschicht (22) bestehenden Laminats (16). Vor dem Einformen des Laminats in die Spritzform wird auf die Schaumstoffoberfläche eine Trennschicht (18) aufgebracht. Die Trennschicht besteht aus einem Trennmittel, daß eine Mischung aus einer wässrigen Kautschuk-Dispersion und einer wässrigen Silikonemulsion enthält.

Aus der WO 94/01278 und dem darin genannten Stand der Technik ist ein Verfahren zur Herstellung von textilen Oberböden in Kraftfahrzeugen durch
(a) Aufrakeln eines Gemisches aus Schaumstoffflocken und einem selbsthärtenden Bindemittel (Absorptionsschaum) 2 in einer Matrizenform des Bodenblechs des Kraftfahrzeugs 1 in einem gewünschten Schichtdickenprofil,
(b) Aufbringen mittels Pressen des mit einer Schwerschicht 3 versehenen, gegebenenfalls vorgeformten textilen Bodenbelages 4 auf das Gemisch aus Schaumstoffflocken und selbsthärtendem Bindemittel 2 unter Einstellung der gewünschten Schaumstoffflockendichte,
(c) Aktivieren des Bindemittels und
(d) Verkleben des Gemisches aus Schaumstoffflocken und selbsthärtendem Bindemittel 2 mit der Schwerschicht 3 des textilen Bodenbelages bekannt. Mit Hilfe dieser Druckschrift läßt sich eine gleichmäßige Dichteverteilung über das Gesamtvolumen des rückseitigen Absorptionsschaums 2 erreichen.

Bei der Wiederverwertung derartiger textiler Oberböden tritt jedoch ein schwerwiegendes Problem dahingehend auf, daß die verwendeten Schichten untrennbar miteinander verbunden sind und somit nur Mehrkomponenten-Gemische für eine Wiederverwendung einsetzbar sind. Prinzipiell ließen sich jedoch die mit der Schwerschicht verbundenen textilen Bodenbeläge einerseits und die Schaumstoffrückseite andererseits nach einer Trennung ausgezeichneten Wiederverwendungsmöglichkeiten zuführen.

Dementsprechend besteht die Aufgabe der vorliegenden Erfindung darin, wiederverwertbare textile Oberböden in Kraftfahrzeugen mit einem mehrschichtigen Aufbau zur Verfügung zu stellen, bei denen eine wirtschaftlich sinnvolle Trennung der einzelnen Aufbauschichten nach dem Gebrauch des Kraftfahrzeuges vorgenommen werden kann. Hierbei ist nicht die vollständige Trennung aller vorhandenen Schichten von Bedeutung sondern eine wirtschaftlich sinnvolle einfache oder zweifache Trennung von Schichten.

Die vorstehend genannte Aufgabe wird in einer ersten Ausführungsform der vorliegenden Erfindung gelöst durch wiederverwertbare textile Oberböden in Kraftfahrzeugen 1 mit einem mehrschichtigen Aufbau in der Reihenfolge aus
a) einer Schaumstoffschicht 2,
b) einer in die Schaumstoffschicht nicht eindringenden Trennfolie 5,
c) einer Schwerschicht 3 und
d) einem textilen Bodenbelag 4,
wobei die Haftfähigkeit der Trennfolie 5 zur Schwerschicht 3 geringer ist als die Haftfähigkeit der Trennfolie 5 zu der Schaumstoffschicht 2, so daß die Trennfolie 5 von der Schwerschicht 3 abtennbar ist.

In einer zweiten Ausführungsform wird die obengenannte Aufgabe gelöst durch wiederverwertbare textile Oberböden in Kraftfahrzeugen 1 mit einem mehrschichtigen in der Reihenfolge Aufbau aus
a) einer Schaumstoffschicht 2,
b) einer in die Schaumstoffschicht nicht eindringenden Trennfolie 5,
c) einer Schwerschicht 3 und
d) einem textilen Bodenbelag 4,
wobei die Haftfähigkeit der Trennfolie 5 zur Schwerschicht 3 größer ist als die Haftfähigkeit der Trennfolie 5 zu der Schaumstoffschicht 2, so daß die Trennfolie 5 von der Schaumstoffschicht 2 abtrennbar ist.

In einer weiteren dritten Ausführungsform der vorliegenden Erfindung wird die vorstehend genannte Aufgabe gelöst durch Oberböden wie oben definiert, wobei die Trennfolie 5 durch punktuelle Verklebung mit der Schwerschicht 3 und/oder durch punktuelle Verklebung mit der Schaumstoffschicht 2 trennbar verbunden ist.

Mit Hilfe der vorliegenden Erfindung ist es somit möglich, nach dem Gebrauch des Kraftfahrzeuges die Schaumstoffschicht 2 von der Schwerschicht 3, die wiederum mit dem textilen Bodenbelag 4 fest verbunden bleibt, zu trennen und diese jeweils einer gesonderten Verwertung zuzuführen.

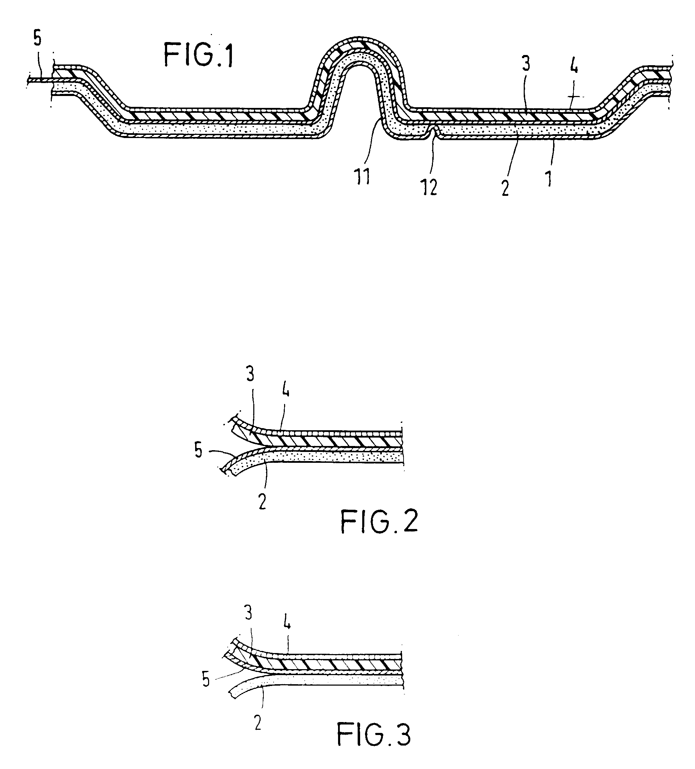

In der Fig. 1 ist eine Matrizenform eines Bodenblechs 1 eines Kraftfahrzeuges wiedergegeben. Der Getriebetunnel 11 und eine Kabelschacht 12 ragen aus der ansonsten ebenen Matrizenform heraus. Während der Kabelschacht 12 von der Oberseite der Schaumstoffschicht 2 und dem selbsthärtenden Bindemittel nicht sichtbar ist, wird der Getriebetunnel 11 von der Schaumstoffschicht 2 mit konstanter Schichtdicke umschlossen.

Zwischen der Schaumstoffschicht 2 und der Schwerschicht 3 befindet sich eine Trennfolie 5, die gemäß der ersten und zweiten Ausführungsform, bedingt durch die unterschiedliche Materialien und/oder den Herstellungsverfahren der Schaumstoffschicht 2 und der Schwerschicht 3 unterschiedliche Haftfähigkeiten zu diesen Schichten aufweist. Die Schwerschicht 3 ist ihrerseits mit dem textilen Bodenbelag 4 fest verbunden.

Gemäß der dritten Ausführungsform ist die Trennfolie 5 mit der Schwerschicht 3 und/oder der Schaumstoffschicht 2 nur punktuell verklebt, so daß eine Trennung dieser Schichten durch Auseinanderreißen möglich ist, wie in den Fig. 2 und 3 dargestellt wird.

Besonders bevorzugt besteht die Schaumstoffschicht 2 aus wiederverwendeten Schaumstoffflocken, die beispielsweise bei der Herstellung von anderen Gegenständen als Abfallmaterialien anfallen. Dementsprechend wird in einer bevorzugten Ausführungsform der vorliegenden Erfindung ein Gemisch aus 70 bis 99 Vol.-% Schaumstoffflocken und 1 bis 30 Vol.-% Bindemittel als Schaumstoffschicht eingesetzt. In einer weiter bevorzugten Ausführungsform der vorliegenden Erfindung besteht das Gemisch der Schaumstoffschicht aus 75 bis 90 Vol.-% Schaumstoffflocken und 10 bis 25 Vol.-% Bindemittel.

Die Größe der Schaumstoffflocken ist von geringerer Bedeutung, -sie sollte jedoch nicht die geringste Schichtdicke des Absorptionsschaumes, beispielsweise oberhalb des Kabelschachtes 12, überschreiten, da sonst keine ausreichend glatte Oberfläche zum Aufbringen des textilen Bodenbelags 4 geschaffen wird. Dementsprechend ist es besonders bevorzugt, Schaumstoffflocken in einer Größe von 1 bis 30 mm einzusetzen. Da üblicherweise die Dicke des Absorptionsschaums 2 zur Herstellung von textilen Oberböden 4 in Kraftfahrzeugen stellenweise etwa 2 bis 100 mm, insbesondere 5 bis 80 mm beträgt, ist bei einer so gewählten Größe der Schaumstoffflocken gewährleistet, daß die Rückstellkräfte der Schaumstoffflocken nicht zu einer Verschlechterung der Oberflächenqualität des Absorptionsschaums 2 führen.

Die Auswahl des selbsthärtenden Bindemittels unterliegt praktisch keinen Begrenzungen, solange das Bindemittel geeignet ist, die eingesetzten Schaumstoffflocken ausreichend fest zu verbinden und eine ausreichende Elastizität aufweist, um akustisch wirksam zu sein. Darüber hinaus ist eine ausreichende Benetzung der Schaumstoffflocken erforderlich, um einen festen Verbund zu schaffen. Auch muß eine gute Verbindung mit der Trennfolie 5 möglich sein.

Dementsprechend besteht eine bevorzugte Ausführungsform der vorliegenden Erfindung darin, daß man als Bindemittel ein Phenolharz, ein Einkomponenten-Polyurethan oder eine Latexemulsion, gegebenenfalls gefüllt mit Polyolefinfasern, beispielsweise Polypropylenfasern, einsetzt.

In derartigen Gemischen aus Schaumstoffflocken und Bindemittel können die Bindemittelaktivitäten, beispielsweise durch Einwirkung von Temperatur, Wasserdampf und/oder Druck aktiviert werden. Hierbei tritt eine Aushärtung des gegebenenfalls thermoplastischen elastischen Bindemittels ein, die zu einem akustisch wirksamen Absorptionsschaum 2 führt, der über das gesamte Volumen in etwa die gleiche Dichte aufweist. Somit sind die Schallabsorptionseigenschaften über das gesamte Volumen annähernd gleich.

Die (gewünschte) Haftfähigkeit und punktuelle Verklebung des Materials der Trennfolie 5 mit der Schwerschicht 3 einerseits und der Schaumstoffschicht andererseits bestimmt im wesentlichen die Einsetzbarkeit eines Materials. Besonders bevorzugt im Sinne der vorliegenden Erfindung ist die Verwendung einer biaxial gereckten Polyalkylenfolie, insbesondere eine Polyethylenfolie, wie sie für Verpackungszwecke Verwendung findet.

Als Schwerschicht 3 kann beispielsweise im Rahmen der vorliegenden Erfindung eine handelsübliche, mit bis zu 80 Gew.-%, insbesondere 70 Gew.-%, Füllstoffanteilen gefüllte EPDM-Folie, eingesetzt werden.

Gemäß der vorliegenden Erfindung ist es möglich, Schwerschichten 3 mit einer geringeren Qualität als üblich einzusetzen. Bei verschiedenen Herstellungsverfahren der erfindungsgemäßen wiederverwertbaren textilen Oberböden wird nämlich eine Verbindung der Schaumstoffschicht 2 mit dem darüber befindlichen Aufbau des textilen Oberbodens über die Trennfolie 5 durch das Hinterschäumen der Schwerschicht 3 erreicht. Hierbei treten bei der Verwendung von üblichen Schwerschichten 3 ohne Trennfolie 5 häufig Durchschüsse von Schaumstoffmaterial in den textilen Bodenbelag 4 auf, der damit unbrauchbar wird. Mit Hilfe der vorliegenden Erfindung und insbesondere der Einführung der Trennfolie 5 werden derartige Durchschüsse bei der Herstellung der wiederverwertbaren textilen Oberböden vermieden.

Als textiler Bodenbelag 4 im Sinne der vorliegenden Erfindung kann ein im Stand der Technik bekannter rückenbeschichteter Velours- oder Nadelfilz eingesetzt werden. Vorzugsweise wird das Laminat aus rückbeschichtetem Velours- oder Nadefilz-Belag und Schwerschicht 3 vor dem Inkontaktbringen mit dem Absorptionsschaum 2 entsprechend vorgeformt. In gleicher Weise ist es jedoch möglich, die Verformung des textilen Belages beim Verbinden mit dem Absorptionsschaum 2 vorzunehmen.

Zur Herstellung der eingangs definierten wiederverwertbaren textilen Oberböden sind verschiedene Verfahren möglich.

Dementsprechend besteht eine erste Ausführungsform des Verfahrens zur Herstellung der wiederverwertbaren textilen Oberböden in Kraftfahrzeugen in einem Verfahren durch
a) Aufrakeln eines Gemisches aus Schaumstoffflocken und einem selbsthärtenden Bindemittel (Absorptionsschaum) in einer Matrizenform des Bodenbleches des Kraftfahrzeuges 1 in einem gewünschten Schichtdickenprofil,
b) Aufbringen mittels Pressen des mit der Trennfolie 5 und der Schwerschicht 3 versehenen, gegebenenfalls vorgeformten, Bodenbelags auf das Gemisch aus Schaumstoffflocken und selbsthärtendem Bindemittel unter Einstellung der gewünschten Schaumstoffflockendichte,
c) Aktivieren des Bindemittels und
Verkleben des Gemisches aus Schaumstoffflocken und selbsthärtendem Bindemittel mit der Trennfolie 5.

Eine zweite Ausführungsform des Verfahrens ist gekennzeichnet durch
a) Aufrakeln eines Gemisches aus Schaumstoffflocken und einem selbsthärtenden Bindemittel (Absorptionsschaum) in einer Matrizenform des Bodenbleches des Kraftfahrzeuges 1 in einem gewünschten Schichtdickenprofil,
b) Aufbringen mittels Pressen der Trennfolie 5 auf das Gemisch aus Schaumstoffflocken und selbsthärtendem Bindemittel unter Einstellen der gewünschten Schaumstoffflockendichte,
c) Aktivieren des Bindemittels und
Verkleben des Gemisches aus Schaumstoffflocken und selbsthärtendem Bindemittel 2 mit der Trennfolie 5,
d) Aufbringen mittels Pressen des gegebenenfalls vorgeformten, mit einer Schwerschicht 3 versehenen textilen Bodenbelags 4 auf die Trennfolie 5 und
e) Verkleben der Trennfolie 5 mit der Schwerschicht 3.

Die beiden vorgenannten Verfahrensalternativen haben gegenüber den in der WO 94/01278 genannten Verfahren zur Herstellung von textilen Oberböden in Kraftfahrzeugen den wesentlichen Vorteil, daß bei der Wiederverwendung nach Gebrauch des Kraftfahrzeuges die Schaumstoffschicht 2 von der Schwerschicht 3 getrennt werden kann. Je nach dem, ob die Haftfähigkeit der Trennfolie 5 geringer oder größer ist, verbleibt die Haftverbindung der Trennfolie 5 mit der Schwerschicht 3 oder der Schaumstoffschicht 2.

Die Einstellung der Haftfähigkeit läßt sich insbesondere durch die Reihenfolge der Klebeschritte oder durch die verwendeten Kleber realisieren.

In der Fig. 2 wird eine erste Ausführungsform des erfindungsgemäßen wiederverwertbaren textilen Oberbodens dargestellt, wobei die Haftfähigkeit der Trennfolie 5 zur Schwerschicht 3 geringer ist als die Haftfähigkeit der Trennfolie 5 zur Schaumstoffschicht 2. Beim Auseinanderziehen (Peeling) der Schichten verbleibt die Haftverbindung zwischen der Schaumstoffschicht 2 und der Trennfolie 5.

In der Fig. 3 wird eine zweite Ausführungsform der wiederverwertbaren textilen Oberböden in Kraftfahrzeugen dargestellt, wobei die Haftfähigkeit der Trennfolie 5 zur Schwerschicht 3 größer ist als die Haftfähigkeit der Trennfolie 5 zur Schaumstoffschicht 2. Beim Auseinanderziehen (Peeling) des Schichtaufbaus verbleibt hier die Trennfolie 5 in Verbindung mit der Schwerschicht 3.

Die gemäß beiden alternativen Ausführungsformen erhältlichen einzelnen Schichten können dann einer separaten Wiederverwertung zugeführt werden.

Neben den beiden alternativen Ausführungsformen der Herstellung von textilen Oberböden in Kraftfahrzeugen durch Aufrakeln eines Gemisches aus Schaumstoff flocken und einem selbsthärtenden Bindemittel hat sich jedoch im Stand der Technik ein inverses Aufbauverfahren durchgesetzt, das von einem vorgeformten textilen Bodenbelag 4 ausgeht, der in an sich bekannter Weise mit einer Schwerschicht 3 auf seiner Rückseite versehen ist. Während im Stand der Technik die Schwerschicht 3 mit einem Schaumstoffmaterial nach an sich bekannten Verfahren hinterschäumt wird, ist eine weitere Ausführungsform der vorliegenden Erfindung dadurch gekennzeichnet, daß zwischen der Schwerschicht 3 und der Schaumstoffschicht 2 eine Trennfolie 5 angebracht wird. Mit Hilfe der vorliegenden Erfindung ist es daher möglich, die Schwerschicht 3 in einer minderen Qualität, daß heißt insbesondere mit einem höheren Grad an Füllstoffen auszustatten, da die Trennfolie 5 das Durchschießen von Schaumstoffmaterial durch die Schwerschicht 3 verhindert.

Dementsprechend besteht eine weitere Ausführungsform der vorliegenden Erfindung in einem Verfahren zur Herstellung der obengenannten textilen Oberböden, das dadurch gekennzeichnet ist, daß man
a) einen, gegebenenfalls vorgeformten, textilen Bodenbelag 4 mit einer rückseitigen Schwerschicht 3 versieht,
b) die Schwerschicht 3 mit einer Trennfolie 5 verklebt,
c) die Trennfolie 5 mit einem Schaumstoffmaterial hinterschäumt und
d) gegebenenfalls den textilen Oberboden formt.

Eine weitere Ausführungsform des Verfahrens zur Herstellung der mehrschichtigen textilen Oberböden in Kraftfahrzeugen 1 aus einer Schaumstoffschicht 2, einer Trennfolie 5, einer Schwerschicht 3 und einem textilem Bodenbelag 4 besteht in einem Verfahren durch
a) Aufrakeln eines Gemisches aus Schaumstoffflocken und einem selbsthärtenden Bindemittel (Absorptionsschaum) in einer Matrizenform des Bodenbleches des Kraftfahrzeuges 1 in einem gewünschten Schichtdickenprofil,
b) Aufbringen mittels Pressen einer Trennfolie 5 auf das Gemisch aus Schaumstoffflocken und selbsthärtendem Bindemittel 2 unter Einstellung der gewünschten Schaumstoffflockendichte,
c') ganzflächiges Verkleben des Gemisches aus Schaumstoffflocken und selbsthärtendem Bindemittel mit der Trennfolie 5 durch Aktivieren des Bindemittels,
d') punktuelles Aufbringen eines Klebemittels auf die Trennfolie 5 und/oder eine Schwerschicht 3, die gegebenenfalls mit einem textilen Bodenbelag 4 versehen ist,
e') punktuelles Verkleben der Trennfolie 5 mit der Schwerschicht 3 und
f') Versehen der Schwerschicht 3 mit einem textilen Bodenbelag 4, sofern die Schwerschicht 3 in Verfahrensschritt d' nicht bereits mit dem textilen Bodenbelag 4 versehen ist.

Das vorgenannte Verfahren hat ebenfalls gegenüber den in der WO 94/01278 genannten Verfahren zur Herstellung von textilen Oberböden in Kraftfahrzeugen den wesentlichen Vorteil, daß bei der Wiederverwendung nach Gebrauch des Kraftfahrzeuges die Schaumstoffschicht 2 von der Schwerschicht 3 über die Trennfolie 5 getrennt und jeweils einer geeigneten Wiederverwertung zugeführt werden kann.

Neben der obengenannten Ausführungsform der Herstellung von textilen Oberböden in Kraftfahrzeugen durch Aufrakeln eines Gemisches aus Schaumstoff flocken und einem selbsthärtenden Bindemittel hat sich jedoch im Stand der Technik ein inverses Aufbauverfahren durchgesetzt. Analog zu den oben beschriebenen Verfahrensvarianten ist eine weitere Ausführungsform der vorliegenden Erfindung dadurch gekennzeichnet, daß zwischen der Schwerschicht 3 und der Schaumstoffschicht 2 zunächst eine Trennschicht 5 angebracht und diese punktuell mit der vorgenannten Schwerschicht 3 verklebt wird. Mit Hilfe der vorliegenden Erfindung ist es daher möglich, die Schwerschicht 3 in einer minderen Qualität, daß heißt insbesondere mit einem höheren Grad an Füllstoffen oder geringerer Dichte auszustatten, da die Trennfolie 5 das Durchschießen von Schaumstoffmaterial durch die Schwerschicht 3 verhindert.

Dementsprechend besteht eine weitere Ausführungsform der vorliegenden Erfindung in einem Verfahren zur Herstellung von mehrschichtigen trennbaren textilen Oberböden in Kraftfahrzeugen 1, durch
a) Versehen eines, gegebenenfalls vorgeformten, textilen Bodenbelags 4 mit einer rückseitigen Schwerschicht 3,
b') punktuelles Aufbringen eines Klebemittels auf die Trennfolie (5) und/oder die Schwerschicht (3) und punktuelles Verkleben
c) Hinterschäumen der Trennfolie 5 mit einem Schaumstoffmaterial, und
d) gegebenenfalls Formen des textilen Oberbodens.

Besonders bevorzugte Kleber, zur ganzflächigen oder insbesondere zur punktuellen Verklebung der Schwerschicht 3 und/oder der Schaumstoffschicht 2 mit der Trennschicht 5, sind Schmelzkleber, gegebenenfalls wärmeaktivierbare Polyethylenkleber, Polyurethankleber und/oder Latexemulsionskleber.

Die gemäß den Ausführungsformen erhältlichen einzelnen Schichten können dann einer separaten Wiederverwertung zugeführt werden.

## Patentansprüche

1. Wiederverwertbare textile Oberböden in Kraftfahrzeugen (1) mit einem mehrschichtigen Aufbau in der Reihenfolge aus
a) einer Schaumstoffschicht (2),
b) einer in die Schaumstoffschicht (2) nicht eindringenden Trennfolie (5),
c) einer Schwerschicht (3) und
d) einem textilen Bodenbelag (4),
wobei die Haftfähigkeit der Trennfolie (5) zur Schwerschicht (3) geringer ist, als die Haftfähigkeit der Trennfolie (5) zu der Schaumstoffschicht (2), so daß die Trennfolie (5) von der Schwerschicht (3) abtrennbar ist.

2. Wiederverwertbare textile Oberböden nach Anspruch 1 in Kraftfahrzeugen (1) mit einem mehrschichtigen Aufbau gemäß Anspruch 1, wobei die Haftfähigkeit der Trennfolie (5) zur Schwerschicht (3) größer ist, als die Haftfähigkeit der Trennfolie (5) zu der Schaumstoffschicht (2), so daß die Trennfolie (5) von der Schaumstoffschicht (2) abtrennbar ist.

3. Textile Oberböden nach Anspruch 1 oder 2, wobei die Trennfolie (5) durch punktuelle Verklebung mit der Schwerschicht (3) und/oder durch punktuelle Verklebung mit der Schaumstoffschicht (2) trennbar verbunden ist.

4. Textile Oberböden nach Anspruch 1, dadurch gekennzeichnet, daß die Schaumstoffschicht (2) ein Gemisch aus 70 bis 99 Vol.-% Schaumstoffflocken und 1 bis 30 Vol.-% Bindemittel besteht.

5. Textile Oberböden nach Anspruch 1, dadurch gekennzeichnet, daß die Schaumstoffschicht (2) aus einem Gemisch aus 75 bis 90 Vol.-% Schaumstoffflocken und 10 bis 25 Vol.-% Bindemittel besteht.

6. Textile Oberböden nach einem der Ansprüche 1 bis 5, dadurch gekennzeichnet, daß die Schaumstoffflocken eine Größe von 1 bis 30 mm aufweisen.

7. Textile Oberböden nach einem der Ansprüche 4 bis 6, dadurch gekennzeichnet, daß das Bindemittel ein Phenolharz, ein Einkomponenten-Polyurethan oder eine Latexemulsion, gegebenenfalls gefüllt mit Polyolefinfasern, insbesondere Polypropylenfasern ist.

8. Textile Oberböden nach einem der Ansprüche 4 bis 7, dadurch gekennzeichnet, daß das Bindemittel durch Einwirkung von Temperatur, Wasserdampf und/oder Druck aktivierbar ist.

9. Textile Oberböden nach einem der Ansprüche 1 bis 8, dadurch gekennzeichnet, daß die Trennfolie (5) eine biaxial gereckte Polyalkylenfolie, insbesondere Polyethylenfolie, ist.

10. Textile Oberböden nach einem der Ansprüche 1 bis 9, dadurch gekennzeichnet, daß die Schwerschicht (3) eine mit bis zu 80 Gew.-%, insbesondere bis 70 Gew.-%, Füllstoffanteilen gefüllte EPDM-Folie ist.

11. Textile Oberböden nach einem der Ansprüche 1 bis 10, dadurch gekennzeichnet, daß der textile Bodenbelag (4) ein rückenbeschichteter Velour- oder Nadelfilz-Belag ist.

12. Verfahren zur Herstellung von wiederverwertbaren textilen Oberböden in Kraftfahrzeugen (1), wie in einem der Ansprüche 1 bis 11 definiert, mit einem mehrschichtigen Aufbau durch
a) Aufrakeln eines Gemisches aus Schaumstoffflocken und einem selbsthärtenden Bindemittel (Absorptionsschaum) in einer Matrizenform des Bodenbleches des Kraftfahrzeuges (1) in einem gewünschten Schichtdickenprofil,
b) Aufbringen mittels Pressen eines mit der Trennfolie (5) und der Schwerschicht (3) versehenen, gegebenenfalls vorgeformten, textilen Bodenbelages (4) auf das Gemisch aus Schaumstoffflocken und selbsthärtendem Bindemittel unter Einstellung der gewünschten Schaumstoffflockendichte,
c) Aktivieren des Bindemittels und
Verkleben des Gemisches aus Schaumstoffflocken und selbsthärtendem Bindemittel mit der Trennfolie (5).

13. Verfahren zur Herstellung von wiederverwertbaren textilen Oberböden in Kraftfahrzeugen (1) wie in einem der Ansprüche 1 bis 11 definiert, durch
a) Aufrakeln eines Gemisches aus Schaumstoffflocken und einem selbsthärtenden Bindemittel (Absorptionsschaum) in einer Matrizenform des Bodenbleches des Kraftfahrzeuges (1) in einem gewünschten Schichtdickenprofil,
b) Aufbringen mittels Pressen der Trennfolie (5) auf das Gemisch aus Schaumstoffflocken und selbsthärtendem Bindemittel unter Einstellen der gewünschten Schaumstoffflockendichte,
c) Aktivieren des Bindemittels und
Verkleben des Gemisches aus Schaumstoffflocken und selbsthärtendem Bindemittel mit der Trennfolie (5),
d) Aufbringen mittels Pressen eines gegebenenfalls vorgeformten, mit einer Schwerschicht (3) versehenen textilen Bodenbelages (4) auf die Trennfolie (5) und
e) Verkleben der Trennfolie (5) mit der Schwerschicht (3) .

14. Verfahren zur Herstellung von wiederverwertbaren textilen Oberböden in Kraftfahrzeugen (1), wie in einem oder mehreren Ansprüchen 1 bis 11 definiert, durch
a) Versehen eines, gegebenenfalls vorgeformten, textilen Bodenbelags (4) mit einer rückseitigen Schwerschicht (3),
b) Verkleben der Schwerschicht (3) mit einer Trennfolie (5),
c) Hinterschäumen der Trennfolie (5) mit einem Schaumstoffmaterial und
d) gegebenenfalls Formung des textilen Oberbodens.

15. Verfahren nach Anspruch 13, gekennzeichnet durch die Schritte c', d', e' und f'
c') ganzflächiges Verkleben des Gemisches aus Schaumstoffflocken und selbsthärtendem Bindemittel (2) mit der Trennfolie (5) durch Aktivieren des Bindemittels,
d') punktuelles Aufbringen eines Klebemittels auf die Trennfolie (5) und/oder eine Schwerschicht (3), die gegebenenfalls mit einem textilen Bodenbelag (4) versehen ist,
e') punktuelles Verkleben der Trennfolie (5) mit der Schwerschicht (3) und
f') Versehen der Schwerschicht (3) mit einem textilen Bodenbelag (4), sofern die Schwerschicht (3) in Verfahrensschritt d' nicht bereits mit dem textilen Bodenbelag (4) versehen ist.

16. Verfahren nach Anspruch 14, gekennzeichnet durch den Schritt (b'),
(b') punktuelles Aufbringen eines Klebemittels auf die Trennfolie (5) und/oder die Schwerschicht (3) und punktuelles Verkleben.

17. Verfahren nach Anspruch 15 oder 16, dadurch gekennzeichnet, daß man zur Verklebung, insbesondere zur punktuellen Verklebung, Schmelzkleber, gegebenenfalls wärmeaktivierbare Polyethylenkleber, Polyurethankleber und/oder Latexemulsionskleber einsetzt.

## Claims

1. Recyclable textile floor coverings (1) for motor vehicles with a multi-layer structure consisting of, in the order given:
a) a foam layer (2);
b) a separation sheet (5) which does not penetrate in said foam layer (2);
c) a heavy layer (3); and
d) a textile carpet (4);
wherein the adhesiveness of said separation sheet (5) with respect to said heavy layer (3) is lower than the adhesiveness of said separation sheet (5) with respect to said foam layer (2), so that said separation sheet (5) can be separated from said heavy layer (3).

2. The recyclable textile floor coverings (1) for motor vehicles according to claim 1 with a multi-layer structure according to claim 1 wherein the adhesiveness of said separation sheet (5) with respect to said heavy layer (3) is higher than the adhesiveness of said separation sheet (5) with respect to said foam layer (2), so that said separation sheet (5) can be separated from said foam layer (2).

3. The textile floor coverings according to claim 1 or 2 wherein said separation sheet (5) is separably bonded to said heavy layer (3) by spot bonding and/or is separably bonded to said foam layer (2) by spot bonding.

4. The textile floor coverings according to claim 1, characterized in that said foam layer (2) consists of a mixture of from 70 to 99% by volume of foam off-cuts and from 1 to 30% by volume of binder(s).

5. The textile floor coverings according to claim 1, characterized in that said foam layer (2) consists of a mixture of from 75 to 90% by volume of foam off-cuts and from 10 to 25% by volume of binder(s).

6. The textile floor coverings according to any of claims 1 to 5, characterized in that said foam off-cuts have a size of from 1 to 30 mm.

7. The textile floor coverings according to any of claims 4 to 6, characterized in that said binder is a phenol resin, a one-component polyurethane or a latex emulsion, optionally filled with polyolefine fibers, especially polypropylene fibers.

8. The textile floor coverings according to any of claims 4 to 7, characterized in that said binder can be activated by the action of temperature, steam and/or pressure.

9. The textile floor coverings according to any of claims 1 to 8, characterized in that said separation sheet (5) is a biaxially drawn polyalkylene sheet, in particular a polyethylene sheet.

10. The textile floor coverings according to any of claims 1 to 9, characterized in that said heavy layer (3) is an EPDM sheet containing up to 80%, in particular up to 70%, by weight of a filler.

11. The textile floor coverings according to any of claims 1 to 10, characterized in that said textile carpet (4) is a velours or needle felt coated on the backside.

12. A process for the preparation of recyclable textile floor coverings (1) for motor vehicles as defined in any of claims 1 to 11 with a multi-layer structure by
a) wiper blade coating a mixture of foam off-cuts and a self-curing binder (absorption foam) in a matrix form of the floor panel (1) of the motor vehicle in a desired layer thickness profile;
b) applying by pressing the optionally premolded textile carpet (4) provided with separation sheet (5) and heavy layer (3) on the mixture of foam off-cuts and self-curing binder while adjusting the desired density of the foam off-cuts;
c) activating the binder and bonding the mixture of foam off-cuts and self-curing binder to separation sheet (5).

13. A process for the preparation of recyclable textile floor coverings (1) for motor vehicles as defined in any of claims 1 to 11 by
a) wiper blade coating a mixture of foam off-cuts and a self-curing binder (absorption foam) in a matrix form of the floor panel (1) of the motor vehicle in a desired layer thickness profile;
b) applying by pressing separation sheet (5) on the mixture of foam off-cuts and self-curing binder while adjusting the desired density of the foam off-cuts;
c) activating the binder and bonding the mixture of foam off-cuts and self-curing binder to separation sheet (5);
d) applying by pressing the optionally premolded textile carpet (4) provided with heavy layer (3) on separation sheet (5); and
e) bonding separation sheet (5) to heavy layer (3).

14. A process for the preparation of recyclable textile floor coverings (1) for motor vehicles as defined in one or more of claims 1 to 11 by
a) backing an optionally pre-molded textile carpet (4) with a heavy layer (3);
b) bonding heavy layer (3) to a separation sheet (5);
c) foam-backing separation sheet (5) with a foam material; and
d) optionally shaping the textile floor covering.

15. A process according to claim 13, characterized by steps c', d', e' and f':
c') whole-area bonding of said mixture of foam off-cuts and self-curing binder (2) to separation sheet (5) by activating said binder;
d') applying an adhesive in spots on separation sheet (5) and/or heavy layer (3) which is optionally provided with a textile carpet (4);
e') spot-bonding separation sheet (5) with heavy layer (3); and
f') providing heavy layer (3) with a textile carpet (4), unless heavy layer (3) is already provided with textile carpet (4) in process step d'.

16. A process according to claim 14, characterized by step (b'):
(b') applying an adhesive in spots on separation sheet (5) and/or heavy layer (3) and spot-bonding.

17. The process according to claim 15 or 16, characterized in that for bonding, in particular for spot-bonding, hot melt adhesives, optionally heat-activatable polyethylene adhesives, polyurethane adhesives, and/or latex emulsion adhesives are used.

## Revendications

1. Tapis de sol textile recyclable pour véhicules à moteur (1), ayant une structure composite comprenant dans l'ordre :
a) une couche de matériau alvéolaire (2),
b) un film de séparation (5) ne pénétrant pas dans la couche de matériau alvéolaire (2),
c) une couche dense (3) et
c) un revêtement de sol textile (4),
dans lequel l'adhérence du film de séparation (5) à la couche dense (3) est inférieure à l'adhérence du film de séparation (5) à la couche de matériau alvéolaire (2) de telle sorte que le film de séparation (5) puisse être séparé de la couche dense (3).

2. Tapis de sol textile recyclable selon la revendication 1, pour véhicules à moteur (1), ayant une structure composite selon la revendication 1, dans lequel l'adhérence du film de séparation (5) à la couche dense (3) est supérieure à l'adhérence du film de séparation (5) à la couche de matériau alvéolaire (2), de telle sorte que le film de séparation (5) puisse être séparé de la couche de matériau alvéolaire (2).

3. Tapis de sol textile selon la revendication 1 ou 2, dans lequel le film de séparation (5) est relié de manière séparable par collage ponctuel avec la couche dense (3) et/ou par collage ponctuel avec la couche de matériau alvéolaire (2).

4. Tapis de sol textile selon la revendication 1, caractérisé en ce que la couche de matériau alvéolaire (2) est constituée d'un mélange de 70 à 99% en volume de flocons de matériau alvéolaire et de 1 à 30% en volume d'agent liant.

5. Tapis de sol textile selon la revendication 1, caractérisé en ce que la couche de matériau alvéolaire (2) est constituée d'un mélange de 75 à 90% en volume de flocons de matériau alvéolaire et de 10 à 25% en volume d'agent liant.

6. Tapis de sol textile selon l'une quelconque des revendications 1 à 5, caractérisé en ce que les flocons de matériau alvéolaire ont une taille de 1 à 30 mm.

7. Tapis de sol textile selon l'une quelconque des revendications 4 à 6, caractérisé en ce que l'agent liant est une résine phénolique, un polyuréthane à un composant ou une émulsion de latex, éventuellement chargé(e) de fibres polyoléfiniques, en particulier de fibres de polypropylène.

8. Tapis de sol textile selon l'une quelconque des revendications 4 à 7, caractérisé en ce que l'agent liant peut être activé sous l'effet de la température, de la vapeur d'eau et/ou de la pression.

9. Tapis de sol textile selon l'une quelconque des revendications 1 à 8, caractérisé en ce que le film de séparation (5) est un film de polyalkylène étiré biaxialement, en particulier un film de polyéthylène.

10. Tapis de sol textile selon l'une quelconque des revendications 1 à 9, caractérisé en ce que la couche dense (3) est un film d'EPDM chargé d'une proportion de charges allant jusqu'à 80% en poids, en particulier jusqu'à 70% en poids.

11. Tapis de sol textile selon l'une quelconque des revendications 1 à 10, caractérisé en ce que le revêtement de sol textile (4) est un revêtement de velours ou de feutre aiguilleté enduit au verso.

12. Procédé de fabrication de tapis de sol textiles recyclables pour véhicules à moteur (1), comme définis dans l'une quelconque des revendications 1 à 11, ayant une structure composite, consistant
a) à racler un mélange de flocons de matériau alvéolaire et d'un agent liant autodurcissant (mousse absorbante) dans une matrice ayant la forme du panneau de fond du véhicule à moteur (1) dans un profil d'épaisseur de couche souhaité,
b) à appliquer par pressage un revêtement de sol textile (4), éventuellement préformé, pourvu du film de séparation (5) et de la couche dense (3), sur le mélange de flocons de matériau alvéolaire et d'agent liant autodurcissant en réglant la densité souhaitée des flocons de matériau alvéolaire, et
c) à activer l'agent liant et à coller le mélange de flocons de matériau alvéolaire et d'agent liant autodurcissant au film de séparation (5).

13. Procédé de fabrication de tapis de sol textiles recyclables pour véhicules à moteur (1), comme définis dans l'une quelconque des revendications 1 à 11, ayant une structure composite, consistant
a) à racler un mélange de flocons de matériau alvéolaire et d'un agent liant autodurcissant (mousse absorbante) dans une matrice ayant la forme du panneau de fond du véhicule à moteur (1) dans un profil d'épaisseur de couche souhaité,
b) à appliquer par pressage le film de séparation (5) sur le mélange de flocons de matériau alvéolaire et d'agent liant autodurcissant en réglant la densité souhaitée des flocons de matériau alvéolaire,
c) à activer l'agent liant et à coller le mélange de flocons de matériau alvéolaire et d'agent liant autodurcissant au film de séparation (5),
d) à appliquer par pressage un revêtement de sol textile (4), éventuellement préformé, pourvu d'une couche dense (3) sur le film de séparation (5), et
e) à coller le film de séparation (5) à la couche dense (3).

14. Procédé de fabrication de tapis de sol textiles recyclables pour véhicules à moteur (1), comme définis dans une ou plusieurs des revendications 1 à 11,
a) en munissant un revêtement de sol textile (4), éventuellement préformé, d'une couche dense (3) au verso,
b) en collant la couche dense (3) à un film de séparation (5),
c) en expansant au verso le film de séparation (5) par un matériau alvéolaire, et
d) en moulant éventuellement le tapis de sol textile.

15. Procédé selon la revendication 13, caractérisé par les étapes c', d', e' et f' consistant
c') à coller sur toute la surface le mélange de flocons de matériau alvéolaire et d'agent liant autodurcissant (2) au film de séparation (5) par activation de l'agent liant,
d') à appliquer ponctuellement un agent adhésif sur le film de séparation (5) et/ou sur une couche dense (3), qui est éventuellement pourvue d'un revêtement de sol textile (4),
e') à coller ponctuellement le film de séparation (5) à la couche dense (3), et
f) à munir la couche dense (3) d'un revêtement de sol textile (4) pour autant que la couche dense (3) n'ait pas déjà été munie du revêtement de sol textile (4) dans l'étape d' du procédé.

16. Procédé selon la revendication 14, caractérisé par l'étape (b') qui consiste à appliquer ponctuellement un agent adhésif sur le film de séparation et/ou sur la couche dense (3) et à effectuer un collage ponctuel.

17. Procédé selon la revendication 15 ou 16, caractérisé en ce qu'on utilise pour le collage, en particulier pour le collage ponctuel, des colles fusibles, éventuellement des colles de polyéthylène, des colles de polyuréthane et/ou des colles d'émulsions de latex activables par la chaleur.
